# FASCICULE DE BREVET EUROPEEN

(11) **EP 1 429 272 B1**
(45) Date de publication et mention de la délivrance du brevet: **22.05.2019**
(21) Numéro de dépôt: 03293108.1
(22) Date de dépôt: 11.12.2003
(51) Int. Cl.: G06Q 10/08, B65G 1/137

(54) **Système de collecte et de vérification automatique de commandes d'objets**
System zum Ansammeln und zur automatischen Prüfung von Bestellungen von Waren
System for picking and automatic verification of orders

(30) Priorité: 13.12.2002 FR 0215797
(43) Date de publication de la demande: 16.06.2004
(73) Titulaire: NEOPOST TECHNOLOGIES, 92220 Bagneux (FR)
(72) Inventeur: Fabre, Bruno, Rés. St Jean, 84300 Cavaillon (FR); Venture, Guy, 13560 Senas (FR)
(74) Mandataire: David, Alain

(56) Documents cités:
- EP-A- 0 732 278
- EP-A- 1 179 490
- WO-A-02/07084
- DE-A- 3 711 237
- DE-A- 19 526 131
- GB-A- 2 371 531
- US-A- 4 850 009
- US-A- 5 962 834
- DATABASE INSPEC [en ligne] INSTITUTE OF ELECTRICAL ENGINEERS, STEVENAGE, GB; "Garment sortation and cold store contract" Database accession no. 7517261 XP002253498 & SHD STORAGE - HANDLING - DISTRIBUTION, OCT. 2002, TURRET GROUP, UK, vol. 46, no. 10, page 62 ISSN: 0039-1832

## Description

### Domaine de l'invention

La présente invention se rapporte au domaine de la logistique et du transport d'objets divers et elle concerne plus particulièrement la collecte d'objets stockés dans des magasins généraux, entrepôts ou ateliers en vue de leur expédition.

### Art antérieur

La collecte et la manutention d'objets dans des ateliers (voir DE19526131A) en vue de leur expédition posent de nombreux problèmes, notamment lorsqu'il s'agit d'effectuer celles-ci rapidement et sans erreurs. Lorsque ces objets sont encombrants et fragiles, comme par exemple dans le domaine de l'habillement, il est connu de les ramasser et les transporter dans l'atelier au moyen de chariots mobiles pouvant se déplacer sur un chemin de roulement fixé au plafond de l'atelier et circulant entre les différentes rangées de vêtements de cet atelier. Ces chariots ou « paniers » sont poussés, ou plus souvent tirés, manuellement par des manutentionnaires au moyen d'une tige de tirage rigide reliée à chaque chariot ou grappe de chariots. Plus rarement, ces chariots sont motorisés individuellement par un moteur électrique ou hydraulique commandé du sol classiquement par chaîne pendante ou boite à boutons-poussoirs.

Actuellement, lorsqu'il s'agit de satisfaire une commande de vêtements, le manutentionnaire chargé de la collecte de ces vêtements dans l'atelier (appelé aussi hall de picking) où ils sont stockés parmi des milliers d'autres en fonction de leurs caractéristiques particulières (marque, modèle, taille, couleur, etc.), suit un circuit de ramassage à sens unique en s'arrêtant successivement, selon une fiche de travail préalablement remplie, devant des rangées de vêtements prédéterminées et correspondant à la commande à satisfaire. A chacun de ces arrêts, le (ou les) vêtement sélectionné est sorti de sa penderie et est suspendu par accrochage sur le chariot. En fin de parcours, les vêtements sont retirés du chariot et directement mis en colis pour expédition chez le destinataire de la commande ainsi traitée.

Or, en pratique, et parfois malheureusement seulement une fois le colis arrivé chez le destinataire, il est souvent constaté des erreurs ou des oublis par rapport à la commande initiale.

### Objet et définition de l'invention

La présente invention a pour objet de pallier ces inconvénients en proposant un système à la fois simple et économique de collecte et vérification automatique d'une commande avant son expédition.

Ces buts sont atteints par un dispositif mobile de collecte et de validation d'objets collectés équipés chacun d'un transpondeur et comportant des moyens pour se déplacer le long d'un chemin de roulement selon un parcours prédéterminé et des moyens pour recevoir un à un les objets collectés lors de ce déplacement, caractérisé en ce qu'il comporte en outre des moyens d'interrogation radio-fréquence pour obtenir une information d'identification sur chacun des objets collectés par le dispositif et des moyens de comparaison pour comparer les informations d'identification obtenues avec des références relatives à une commande d'objets déterminée et ainsi valider les objets collectés au fur et à mesure de leur collecte le long du chemin de roulement.

Ainsi, avec le recours aux transpondeurs d'identification dont sont munis aujourd'hui tous les vêtements, il est possible de garantir au destinataire l'exactitude de sa commande en détectant dès l'accrochage d'un vêtement toute erreur de collecte du manutentionnaire.

Les moyens d'interrogation radio-fréquence comportent une antenne radio-fréquence couplée à un module électronique de traitement des informations d'identification issues des transpondeurs et le module électronique comporte des moyens mémoire pour stocker lesdites références relatives à une commande d'objets déterminée et lesdits moyens de comparaison pour comparer ces références avec les informations d'identification issues des transpondeurs.

De préférence, ladite antenne radio-fréquence et ledit moyen de réception des objets collectés forment un module intégré unique.

Avantageusement, ce module électronique comporte en outre des moyens d'émission/réception à courte distance (de préférence de type radio, bluethooth ou WiFi) pour recevoir d'un ensemble informatique distant lesdites références relatives à une commande d'objets déterminée.

Selon un mode de réalisation préférentiel, le dispositif peut comporter un module électronique détachable comportant des moyens mémoire pour stocker lesdites références relatives à une commande d'objets déterminée, lesdits moyens de comparaison pour comparer ces références avec les informations d'identification issues des transpondeurs et des moyens d'émission/réception à courte distance (de préférence de type infrarouge) pour recevoir d'un ensemble informatique distant lesdites références relatives à une commande d'objets déterminée. Avantageusement, il comporte en outre des moyens de connexion électrique avec un dispositif immédiatement adjacent.

La présente invention concerne également un système de collecte et de vérification de commandes d'objets comportant un ensemble informatique de gestion de commandes d'objets et une pluralité de dispositifs de collecte et de validation d'objets collectés.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'un atelier de stockage de vêtements,
- la figure 2 montre un exemple de chariot selon l'invention sur lequel sont accrochés les vêtements collectés par un manutentionnaire, et
- la figure 3 montre un exemple de panier selon l'invention sur lequel sont accrochés les vêtements collectés par un manutentionnaire.

### Description détaillée d'un mode de réalisation préférentiel

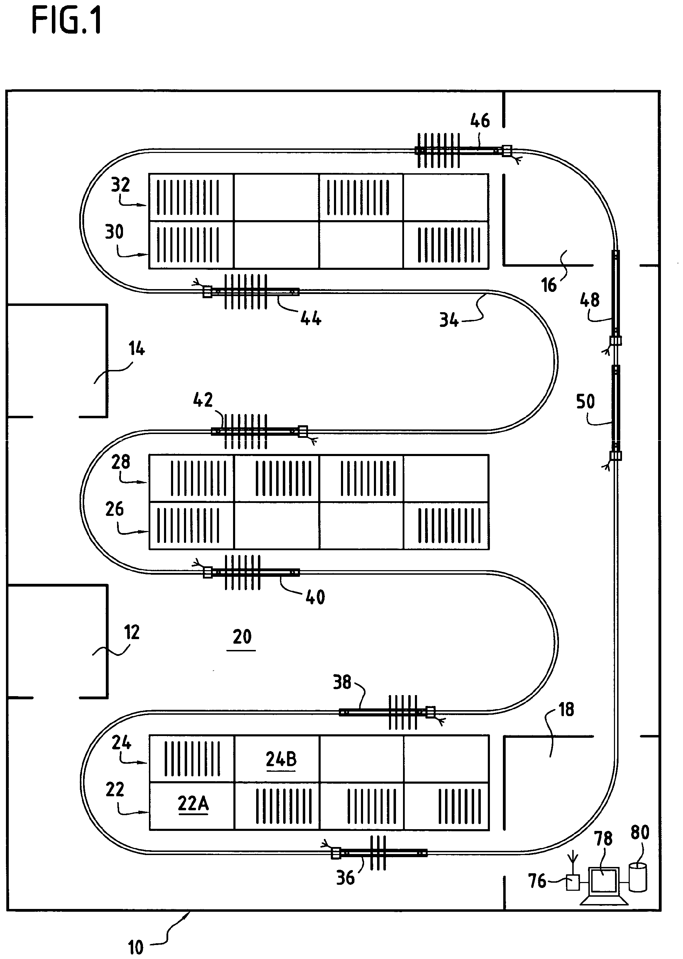

Un atelier de stockage de vêtements est représenté de façon très schématique sur la figure 1. Cet atelier 10 comporte des bureaux administratifs, par exemple 12, 14, 16, 18, et un grand hall (hall de picking 20) dans lequel sont stockés les vêtements à l'issue de leur confection. Ce hall est constitué de plusieurs rangées (par exemple 22, 24, 26, 28, 30, 32) de penderies 22A, 24B, etc.. Serpentant entre ces rangées et fixé au plafond de l'atelier est disposé un chemin fermé de roulement 34 auquel est suspendu une pluralité de chariots 36, 38, 40, 42, 44 , 46, 48, 50 ou « paniers » destinés à recevoir les vêtements collectés par des manutentionnaires lors du traitement des commandes. Ce chemin de roulement à sens unique traverse tout l'atelier et passe devant toutes les penderies de façon à permettre la collecte de n'importe lesquels des vêtements stockés dans l'atelier. Il passe par un local de déchargement, en l'espèce le local 16, où les vêtements sont retirés du chariot pour être emballés avant l'expédition à leur destinataire.

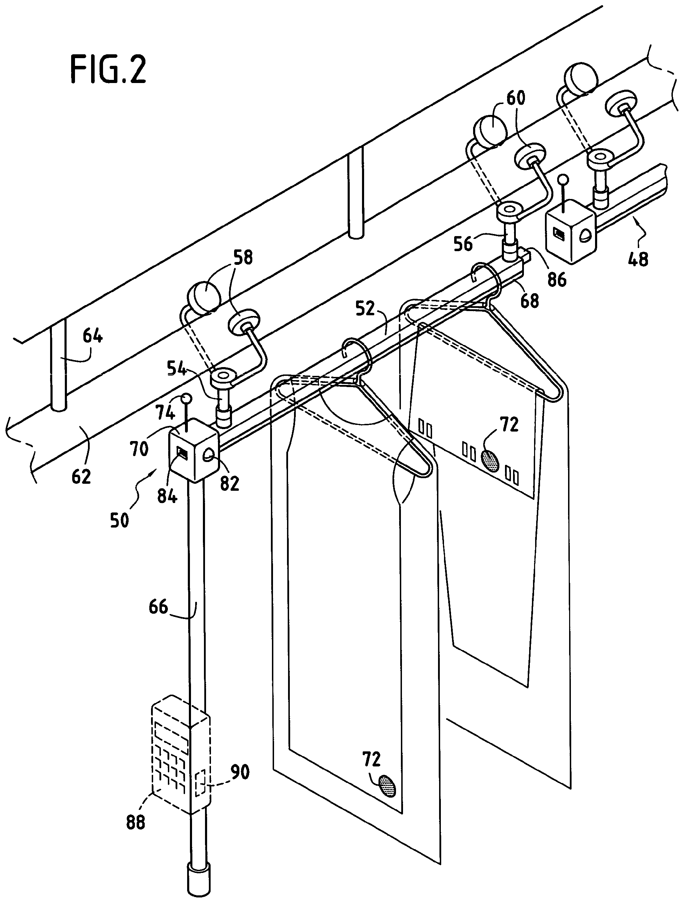

La figure 2 montre un premier exemple de chariot 50 utilisé pour la collecte des vêtements dans l'atelier de la figure 1. Chaque chariot est formé d'une poutre horizontale 52 comportant deux supports 54, 56 fixés à chacune de ses deux extrémités, chaque support comportant des galets 58, 60 pouvant se déplacer le long du chemin de roulement ou rail 62 fixé au plafond de l'atelier par des moyens d'attache quelconques 64. Le chariot est en outre muni d'une tige de tirage 66 pour permettre son déplacement sur le rail par un manutentionnaire.

Actuellement, tous les vêtements sont munis dès leur confection d'émetteurs/récepteurs radio-fréquence (RFID tag) qui sont noyés dans ces vêtements à différents niveaux et qui servent à la fois à l'identification des vêtements en magasin (pour la gestion du stock et des renouvellements et pour la tenue de la comptabilité analytique du magasin) et à une protection contre le vol dans ces magasins. Ces transpondeurs miniaturisés peuvent par exemple être intégrés dans une doublure, un revers, une poche, un bouton, ou encore une étiquette, et comportent classiquement dans des moyens mémoires intégrés des informations d'identification des vêtements auxquels ils sont incorporés, relatives par exemple à la marque, le modèle, la taille, la couleur, etc..

La présente invention se propose de valoriser la présence de ces transpondeurs sur chacun des vêtements stockés dans l'atelier en réalisant un système de collecte et de vérification de commande simple et économique, sur la base d'un processus d'identification de chaque vêtement collecté, qui permette de garantir au destinataire que sa commande soit effectuée sans erreur et sans oubli. Pour cela, chaque chariot de collecte de vêtements est pourvu de moyens d'interrogation radio-fréquence 68, 70 destinés à coopérer avec les transpondeurs 72 noyés dans chacun des vêtements stockés dans l'atelier, de façon à permettre l'identification des vêtements collectés et leur vérification avec la commande du destinataire.

Ces moyens d'interrogation comportent classiquement des moyens d'émission/réception formés d'une ou plusieurs antennes 68 spécialement adaptées aux émissions RFID, par exemple de type parabolique, à guide d'ondes rectangulaire ou à réseau plan, directement intégrées dans la poutre 52 ou formant une partie de celle-ci. Le brevet US 6,184,841 montre un exemple d'une antenne plan à éléments multiples permettant une détection sur une distance pouvant aller jusqu'à 5 mètres. Cette antenne radio-fréquence est couplée à un module électronique auto-alimenté 70 comportant, comme il est connu, une source radio-fréquence et des composants électroniques (alimentation, modulateur, détecteur, convertisseur, unité de traitement) nécessaires à l'alimentation à distance des transpondeurs et au traitement des informations d'identification échangées entre le module électronique 70 et les transpondeurs 72. Le module électronique comporte en outre au niveau de son unité de traitement des moyens de comparaison pour comparer les informations d'identification obtenues des transpondeurs avec des références relatives à une commande d'objets déterminée préalablement emmagasinées dans des moyens mémoire de l'unité de traitement (ou externe à celle-ci) destinés à stocker ces références, et ainsi valider les objets collectés au fur et à mesure de leur collecte le long du chemin de roulement.

Selon la configuration envisagée, l'antenne radio-fréquence peut aussi servir de relais pour un émetteur/récepteur maître, comme il est décrit dans le brevet US 5,936,527, directement relié à un ordinateur personnel (ou micro-ordinateur à usage général) assurant la gestion de l'atelier. Toutefois, dans la configuration illustrée, le module électronique 70 intègre des moyens d'émission/réception courte distance 74, de type bluethooth ou WiFi par exemple, pour retransmettre les informations reçues des transpondeurs vers un ensemble informatique distant comportant l'ordinateur de gestion de l'atelier et un module de base 76 formant moyen d'émission/réception courte distance analogue et relié à l'ordinateur. Cet ordinateur 78 est aussi connecté à une base de données 80 contenant l'ensemble des références relatives aux vêtements stockés dans l'atelier et il peut comporter des moyens logiciel pour comparer les informations d'identification obtenues des transpondeurs avec des références relatives à une commande d'objets déterminée disponibles dans la base de données, de façon à assurer une vérification entre les vêtements collectés par un manutentionnaire et la commande correspondante lorsque ces moyens de comparaison ne sont pas déjà intégrés dans le module électronique 70. Des moyens d'indication visuelle ou sonore 82 sont en outre prévus au niveau des modules électroniques de chacun des chariots pour informer le manutentionnaire d'une erreur de collecte.

En outre, lors de l'exécution d'une commande, un manutentionnaire peut estimer que l'emploi d'un seul chariot est insuffisant pour collecter l'ensemble des vêtements relatifs à cette commande et donc décider par exemple d'en utiliser deux ou plus. C'est pourquoi, le chariot 50 est avantageusement muni à ses deux extrémités de moyens de connexion électrique 84, 86 pour permettre une liaison de puissance et de données avec un chariot amont ou aval immédiatement adjacent 48.

Dans un mode de réalisation préférentiel, les moyens d'émission/réception courte distance 74 ne forment plus une partie du module électronique 70 de chaque chariot mais sont intégrés directement à un dispositif électronique détachable 88 (de type organiseur, assistant personnel ou tablette graphique) affecté à chaque manutentionnaire et qui est connecté au chariot lors de la collecte (par exemple par l'intermédiaire de moyens de connexion électrique (non représentés) présents sur la tige de tirage 66). Du fait de la portabilité du dispositif, ces moyens d'émission/réception courte distance 90 peuvent avantageusement être de simples moyens infrarouges, par exemple de type Firewire. Ce dispositif électronique portable comporte bien évidemment un écran sur lequel le manutentionnaire peut ainsi visualiser sa commande qui aura été préalablement enregistrée dans le dispositif à partir de l'ordinateur de gestion 78. Il peut alors avantageusement intégrer aussi les moyens d'indication visuelle et/ou sonore ainsi que les moyens de comparaison lorsque ceux-ci ne sont pas intégrés dans le module électronique 70.

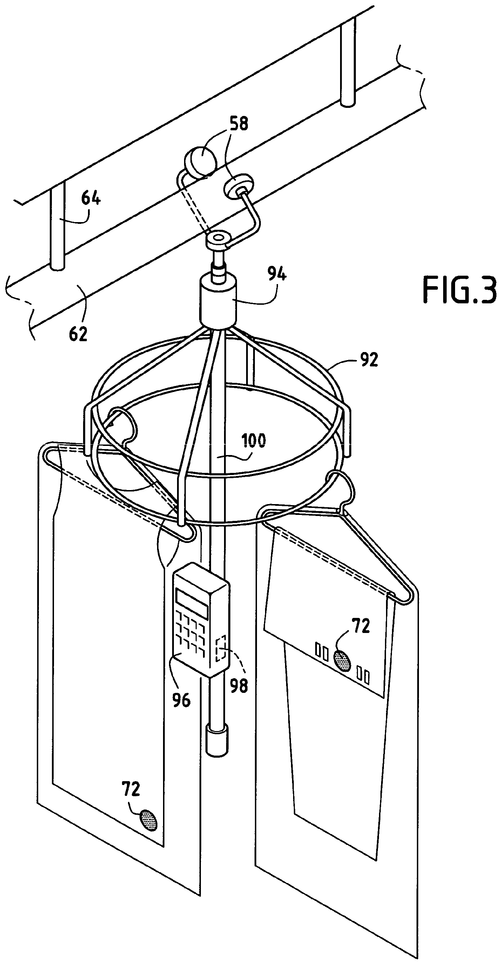

Un second mode de réalisation non revendiqué de l'invention est illustré à la figure 3 dans lequel le chariot de transport des vêtements se présente sous la forme d'un panier 92 formant antenne radio-fréquence pour les moyens d'émission/réception. Cette antenne RFID est couplée à un module électronique auto-alimenté 94 comportant, comme indiqué précédemment, la source radio-fréquence et les composants électroniques (alimentation, modulateur, détecteur, convertisseur, unité de traitement) nécessaires à l'alimentation à distance des transpondeurs et au traitement des informations d'identification échangées entre ce module électronique 94 et les transpondeurs 72. Dans cet exemple de réalisation, l'unité de traitement du module électronique ne comporte pas les moyens de comparaison qui sont déportés dans un dispositif électronique détachable 96 (de type organiseur, assistant personnel ou tablette graphique) affecté à chaque manutentionnaire, qui est connecté au panier lors de la collecte (par exemple par l'intermédiaire de moyens de connexion électrique (non représentés) présents sur une tige de poussée 100 de ce panier), et qui contient les références relatives à une commande d'objets déterminée préalablement emmagasinées dans ses moyens mémoire (par sa liaison infrarouge 98) lui permettant de valider les objets collectés au fur et à mesure de leur collecte le long du chemin de roulement.

Le fonctionnement du système selon l'invention est le suivant. Il diffère selon que le manutentionnaire exécute sa commande avec ou sans dispositif portable. En l'absence de dispositif portable, le manutentionnaire reçoit une fiche de travail papier sur laquelle figure une liste de vêtements à collecter avec leur emplacement dans l'atelier repéré par un numéro de rangée et une référence de penderie, ces vêtements figurant dans un ordre déterminé correspondant au sens unique de déplacement du chariot sur le chemin de roulement. Parallèlement, les informations similaires disponibles dans l'ordinateur de gestion 78, et qui ont été saisies au clavier ou lui ont été transmises au travers d'un réseau interne à l'atelier ou mieux encore par l'intermédiaire d'un réseau externe en liaison directe avec les magasins (de type Intranet par exemple), sont transmises par la liaison courte distance 76, 74 à un chariot de collecte déterminé et stockées dans la mémoire interne de son module électronique 70 (ce type de fonctionnement n'est pas possible avec le second mode de réalisation, le dispositif portable étant dépourvu d'une telle liaison). Lorsque le manutentionnaire dispose d'un dispositif portable, la commande à exécuter est chargée directement à partir de l'ordinateur de gestion (par exemple par l'intermédiaire de sa liaison infrarouge) dans ce dispositif qui est ensuite connecté par le manutentionnaire sur un chariot ou un panier déterminé, cette liaison assurant le chargement automatique des informations relatives à la commande dans la mémoire interne du module électronique 70 de ce chariot.

La collecte proprement dite peut alors commencer. Elle se fait maintenant de façon indifférenciée que le suivi de la commande s'effectue par lecture de la fiche de travail ou par celle de l'écran du dispositif portable. Le manutentionnaire va donc tirer son chariot ou son panier jusqu'au premier emplacement de stockage indiqué sur sa fiche ou son écran, prendre le vêtement référencé et le suspendre alors sur son chariot ou panier. Cette mise en place du vêtement va entraîner par sa seule présence dans le champ d'action de l'émetteur 68 du chariot ou du panier 92, une reconnaissance immédiate et automatique du transpondeur 72 qu'il comporte et dont les informations vont pouvoir être transférées et comparées avec celles de la commande au niveau du module électronique 70, 94. En cas d'erreur, c'est à dire d'une comparaison à résultat négatif, les moyens d'indication visuelle ou sonore 82 sont activés indiquant au manutentionnaire qu'il s'est trompé de vêtement. Il pourra alors sans attendre le retirer du chariot ou du panier et le remplacer par le vêtement correct. Au contraire, une absence d'indication visuelle ou sonore signifiera que le vêtement suspendu est le bon et il pourra poursuivre sa collecte avec les vêtements suivants de la liste jusqu'à ce que sa commande soit achevée.

On notera que les vêtements formant une commande donnée étant stockés dans un ordre déterminé (l'ordre de leur collecte) dans la mémoire du module électronique, la comparaison des vêtements est effectuée dans le même ordre et il est donc possible de détecter un éventuel oubli lorsque le résultat de la comparaison est négatif. Dans le mode de réalisation mettant en oeuvre le dispositif portable, il peut être prévu avantageusement que le vêtement oublié fasse alors l'objet d'un sur-lignage ou sur-éclairement à l'écran du dispositif.

Ainsi, par l'utilisation des transpondeurs déjà présents dans les vêtements, il devient possible de garantir aux destinataires que leur commande soit exécutée sans erreur ni oubli. La mise en place du système est de plus très simple à réaliser puisqu'il suffit seulement de rajouter aux chariots ou paniers de collecte existants des moyens connus d'émission/réception à radio-fréquence pour interroger les transpondeurs et de mettre en liaison ces moyens d'interrogation avec le système informatique de gestion des commandes comme explicité pour vérifier la validité de la collecte.

On notera que si la description précitée a été faite essentiellement en regard de vêtements, elle peut bien entendu s'appliquer à tout autre type d'objets équipés chacun d'un transpondeur et pouvant être stockés dans un atelier ou un entrepôt et collectés au moyen d'un dispositif mobile de collecte de type chariot ou panier, que ce dispositif soit suspendu depuis le plafond de l'atelier comme décrit ou seulement poussé sur un rail au sol.

## Revendications

1. Dispositif mobile (50) de collecte et de validation d'objets collectés équipés chacun d'un transpondeur (72) et comportant des moyens (58, 60) pour se déplacer le long d'un chemin de roulement (34, 62) selon un parcours prédéterminé et des moyens (52) pour recevoir un à un les objets collectés lors de ce déplacement, **caractérisé en ce qu'**il comporte en outre des moyens d'interrogation radio-fréquence (68, 70) comportant une antenne radio-fréquence (68) couplée à un module électronique (70) de traitement des informations d'identification issues des transpondeurs pour obtenir une information d'identification sur chacun des objets collectés par le dispositif mobile (50), le dispositif mobile (50) étant muni à ses deux extrémités de moyens de connexion électrique (84, 86) pour permettre une liaison de puissance et de données avec un dispositif mobile (48) amont ou aval immédiatement adjacent, ledit module électronique comportant des moyens mémoire (70) pour stocker des références relatives à une commande d'objets déterminée et des moyens de comparaison (70, 88) pour comparer ces références avec les informations d'identification obtenues des transpondeurs et ainsi valider les objets collectés au fur et à mesure de leur collecte le long du chemin de roulement.

2. Dispositif selon la revendication 1, **caractérisé en ce que** ladite antenne radio-fréquence et lesdits moyens de réception pour recevoir les objets collectés forment un module intégré unique.

3. Dispositif selon la revendication 1, **caractérisé en ce que** ledit module électronique comporte en outre des moyens d'émission/réception à courte distance (74 ; 90) pour recevoir d'un ensemble informatique distant (76, 78, 80) lesdites références relatives à la commande d'objets déterminée.

4. Dispositif selon la revendication 3, **caractérisé en ce que** lesdits moyens d'émission/réception à courte distance sont de type radio, bluethooth ou WiFi.

5. Dispositif selon la revendication 3, **caractérisé en ce que** lesdits moyens d'émission/réception à courte distance (90) sont intégrés dans un dispositif électronique détachable (88) et **en ce que** lesdits moyens d'émission/réception à courte distance sont de type infrarouge.

6. Dispositif selon la revendication 3, **caractérisé en ce que** ledit module électronique est un module électronique détachable (88).

7. Système de collecte et de vérification de commandes d'objets comportant un ensemble informatique (76, 78, 80) de gestion de commandes d'objets et une pluralité de dispositifs mobiles (48,50) de collecte et de validation d'objets collectés selon l'une quelconque des revendications 1 à 6.

## Patentansprüche

1. Bewegliche Vorrichtung (50) zum Sammeln und Validieren von gesammelten Gegenständen, die jeweils mit einem Transponder (72) ausgestattet sind, und die Mittel (58, 60), um sich entlang einer Laufbahn (34, 62) nach einem vorbestimmten Weg zu bewegen, und Mittel (52) aufweist, um während dieser Bewegung die gesammelten Gegenstände nacheinander aufzunehmen, **dadurch gekennzeichnet, dass** sie ferner Radiofrequenz-Abfragemittel (68, 70) aufweist, umfassend eine Radiofrequenzantenne (68), die mit einem elektronischen Modul (70) zum Verarbeiten der Identifizierungsinformationen aus den Transpondern verbunden ist, um eine Identifizierungsinformation über jeden der Gegenstände, die von der mobilen Vorrichtung (50) gesammelt sind, zu erhalten, wobei die bewegliche Vorrichtung (50) an ihren zwei Enden mit elektrischen Anschlussmitteln (84, 86) ausgestattet ist, um eine Leistungs- und Datenverbindung mit einer unmittelbar benachbarten vorgelagerten oder nachgelagerten beweglichen Vorrichtung (48) zu ermöglichen, wobei das elektronische Modul Speichermittel (70), um Referenzen in Bezug auf eine bestimmte Bestellung von Gegenständen zu speichern, und Vergleichsmittel (70, 88) aufweist, um diese Referenzen mit den Identifizierungsinformationen, die von den Transpondern erhalten sind, zu vergleichen und auf diese Weise die gesammelten Gegenstände im Zuge ihres Sammelns entlang der Laufbahn zu validieren.

2. Vorrichtung nach Anspruch 1, **dadurch gekennzeichnet, dass** die Radiofrequenzantenne und die Mittel zum Aufnehmen, um die gesammelten Gegenstände aufzunehmen, ein einziges integriertes Modul bilden.

3. Vorrichtung nach Anspruch 1, **dadurch gekennzeichnet, dass** das elektronische Modul ferner Mittel zum Senden/Empfangen über kurze Distanz (74; 90) aufweist, um von einer entfernten Datenverarbeitungseinheit (76, 78, 80) die Referenzen in Bezug auf die bestimmte Bestellung von Gegenständen zu empfangen.

4. Vorrichtung nach Anspruch 3, **dadurch gekennzeichnet, dass** die Mittel zum Senden/Empfangen über kurze Distanz vom Typ Radio, Bluetooth oder WiFi sind.

5. Vorrichtung nach Anspruch 3, **dadurch gekennzeichnet, dass** die Mittel zum Senden/Empfangen über kurze Distanz (90) in einer abnehmbaren elektronischen Vorrichtung (88) integriert sind und dass die Mittel zum Senden/Empfangen auf kurze Distanz vom Infrarot-Typ sind.

6. Vorrichtung nach Anspruch 3, **dadurch gekennzeichnet, dass** das elektronische Modul ein abnehmbares elektronisches Modul (88) ist.

7. System zum Sammeln und zum Überprüfen von Bestellungen von Gegenständen, umfassend eine Datenverarbeitungseinheit (76, 78, 80) zum Verwalten von Bestellungen von Gegenständen und mehrere bewegliche Vorrichtungen (48, 50) zum Sammeln und Validieren von gesammelten Gegenständen nach einem der Ansprüche 1 bis 6.

## Claims

1. Mobile device (50) for collecting and validating collected objects each equipped with a transponder (72) and having means (58, 60) for moving along a raceway (34, 62) according to a predetermined path and means (52) for receiving one by one the objects collected during this movement, **characterized in that** it further comprises radio frequency interrogation means (68, 70) comprising a radio frequency antenna (68) coupled to an electronic module (70) for processing the identification information from the transponders, for obtaining identification information on each of the objects collected by the mobile device (50), the mobile device (50) comprising at its two extremities electrical connection means (84, 86) for a power and data connection with an immediately adjacent upstream and downstream mobile device (48), said electronic module comprising memory means (70) for storing references relating to a determined object control and comparison means (70, 88) for comparing these references with the identification information from transponders and thus validate the collected objects as a result and as they are collected along the raceway.

2. Device according to claim 1, **characterized in that** said radio-frequency antenna and said receiving means for receiving collected object form a single integrated module.

3. Device according to claim 1, **characterized in that** the electronic module further comprises short-distance transmission / reception means (74; 90) for receiving from a remote computer unit (76, 78, 80) said references relating to the specific object control.

4. Device according to claim 3, **characterized in that** the said short-distance transmission / reception means are of the radio, bluethooth or WiFi type.

5. Device according to claim 3, **characterized in that** said short-distance transmission/reception means (90) are integrated in a detachable electronic device (88) and **in that** the said short-distance transmission / reception means are of the infrared type.

6. Device according to claim 3, **characterized in that** said electronic module is a detachable electronic module (88).

7. An object control collection and verification system comprising an object control management computer set (76, 78, 80) and a plurality of mobile collected object collection and validation devices (48, 50) according to any one of the claims 1 to 6.
